# EUROPÄISCHE PATENTANMELDUNG

(11) **EP 1 555 608 A1**
(43) Veröffentlichungstag der Anmeldung: **20.07.2005**
(21) Anmeldenummer: 04106414.8
(22) Anmeldetag: 09.12.2004
(51) Int. Cl.: G06F 3/16, B60R 16/02, G10L 15/26

(54) **Anordnung zur Sprachbedienung eines elektronischen Gerätes, insbesondere in einem Kraftfahrzeug**

(30) Priorität: 14.01.2004 DE 102004002010
(71) Anmelder: SIEMENS AKTIENGESELLSCHAFT, 80333 München (DE)
(72) Erfinder: Hoepken, Harro, 35599 Solms (DE); Karaj, Saimir, 35684 Dillenburg (DE)

(57) **Zusammenfassung**

Mit einer Anordnung zur Sprachbedienung eines elektronischen Gerätes (1) werden auf einem Grafikbildschirm (17) Sprachbefehle (4) und den Sprachbefehlen (4) jeweils zugeordnete Bedienfunktionen (5) des elektronischen Gerätes (1) als Text anzeigt und die Zuordnung zwischen den Sprachbefehlen (4) und den Bedienfunktionen (5) wird grafisch kenntlich macht. Auf diese Weise wird die Bedienerfreundlichkeit erhöht, da die Sprachbefehle (4) direkt abgelesen werden können und nicht mehr auswendig beherrscht werden müssen.

## Beschreibung

Die Erfindung betrifft eine Anordnung zur Sprachbedienung eines elektronischen Gerätes, insbesondere in einem Kraftfahrzeug, mit einer mit dem elektronischen Gerät verbundenen Spracherkennungseinheit, einer mit dem elektronischen Gerät und der Spracherkennungseinheit verbundenen Anzeigeeinheit und einem zur Anzeigeeinheit gehörenden Grafikbildschirm, wobei die Spracherkennungseinheit gesprochene Sprachbefehle identifiziert und zugeordnete Bedienfunktionen des elektronischen Gerätes anwählt und/oder auslöst.

Heutige elektronische Geräte, wie Mobiltelefone, Computer und Geräte der Unterhaltungselektronik können sowohl manuell per Tastatur als auch akustisch per Spracheingabe bedient werden. Die Sprachbedienung bietet sich dabei insbesondere in Umgebungen bzw. für Betriebsbedingungen an, bei denen der Gerätebenutzer seine Hände bereits für andere Tätigkeiten benötigt. So sollte sich ein Fahrzeugführer hauptsächlich auf die Bedienung der Lenkung konzentrieren, weshalb insbesondere in Kraftfahrzeugen verstärkt Geräte mit Sprachbedienung angeboten werden. Diese können entweder einzelne Navigations-, Multimedia- oder Audiogeräte sowie Telefonanlagen mit jeweils separater Bedieneinheit sein, oder es wird eine zentrale Bedieneinheit für mehrere dieser Geräte vorgesehen.

Bekannte Sprachbedienkonzepte beruhen auf der Verwendung fest vorgegebener Befehlswörterbücher, die der Bediener auswendig kennen muss, um mit den in ihnen enthaltenen Sprachbefehlen gewünschte Bedienfunktionen aufzurufen. Die Spracherkennung selbst funktioniert entweder phonembasiert, d.h. es werden Wortbestandteile bis hinunter zu einzelnen Buchstaben durch Vergleich mit Sprachmustern erkannt und daraus die Befehlssequenzen zusammengesetzt, oder template-basiert, d.h. die Frequenzmuster der Sprachbefehle sind jeweils als Ganze in einem Speicher abgelegt und werden mit den Mustern der gesprochenen Befehle verglichen.

Je nach Anwendungsbereich der Spracherkennung werden sprecherunabhängige Systeme realisiert, bei denen die zur Bestimmung der Phoneme bzw. Sprachbefehle verwendeten Muster bereits auf den Daten von einer Vielzahl von Vergleichspersonen beruhen, oder es werden Systeme mit sprecherabhängiger Funktionalität angeboten, bei denen ein Bediener das System erst durch Abspeicherung eigener Sprachmuster trainiert.

Fast allen Systemen gemeinsam ist eine menügeführte Bedienung. Entweder wird der Bediener von einer Sprachausgabe durch das Menü geführt und nach der nächsten gewünschten Weiterverzweigung innerhalb der Menüstruktur gefragt oder der Bediener bewegt sich durch gesprochene Befehle wie "weiter" und "zurück" selbständig durch das Menü. Dieses schrittweise Vorgehen ist umständlich und zeitaufwändig.

Als Abhilfe bietet die DE-199 42 871-A ein Verfahren zum Betrieb einer sprachgesteuerten Befehlseingabeeinheit in einem Kraftfahrzeug an, bei dem so genannte interdisziplinäre Shortcut-Befehle vorgesehen sind, mit denen man während der Betriebsphase eines aktivierten Menüs einen temporären Wechsel in ein anderes, noch nicht aktiviertes Menü generieren kann. Mit den Shortcut-Befehlen ist es beispielsweise möglich, während der Bedienung eines Navigationssystems einen eingehenden Telefonanruf sprachgesteuert anzunehmen, ohne das aktuelle Menü umständlich verlassen und hinterher wieder aufrufen zu müssen. Die Shortcut-Befehle gehören zum Befehlswörterbuch, welches der Bediener kennen muss, um mit der Bedieneinheit kommunizieren zu können.

Aufgabe der vorliegenden Erfindung ist es, eine Anordnung und ein Verfahren zur Sprachbedienung eines elektronischen Gerätes mit verbessertem Bedienkomfort anzugeben.

Die Aufgabe wird durch eine gattungsgemäße Anordnung gelöst, bei der die Anzeigeeinheit auf dem Grafikbildschirm einen Sprachbefehl und eine diesem Sprachbefehl zugeordnete Bedienfunktion als Text anzeigt und die Zuordnung zwischen dem Sprachbefehl und der Bedienfunktion grafisch kenntlich macht.

Auf diese Weise muss der Bediener nicht mehr den zur Auswahl der nächsten Menüfunktion erforderlichen Sprachbefehl auswendig kennen, sondern kann ihn direkt vom Grafikbildschirm abund vorlesen, was die Bedienerfreundlichkeit deutlich erhöht. Die Zuordnung zwischen Sprachbefehl und Bedienfunktion wird beispielsweise durch die Anordnung der beiden auf ein und derselben Zeile bzw. in ein und derselben Spalte oder durch Einfügung eines grafischen Zuordnungszeichens, wie beispielsweise eines Pfeils oder Bindestrichs, verdeutlicht, um vom Bediener schnell erfasst werden zu können.

In einer bevorzugten Ausführung der Erfindung sind mehrere Sprachbefehle in einer Sprachbefehlsliste und mehrere Bedienfunktionen in einer Bedienfunktionsliste zusammengefasst, und die beiden Listen werden von der Anzeigeeinheit in grafischer Zuordnung zueinander dargestellt. Der Bediener kann sich damit schnell über die möglichen nächsten Menüschritte informieren und erhält sofort eine Information über den zu verwendenden Sprachbefehl dazu. Mit der Listenstruktur ist es aber auch möglich, eine Auswahl verschiedener Zahlenwerte zu einer einzustellenden Größe vorzugeben, wie beispielsweise zur Veränderung des Maßstabs einer angezeigten Straßenkarte oder zur Einstellung der Lautstärke eines Autoradios. Der Bediener muss dann lediglich den neben seinem gewünschten Maßstab oder Lautstärkepegel angezeigten Sprachbefehl vorlesen.

In einer weiteren vorteilhaften Ausführung sind die Art der Zuordnung, also ob die Anordnung der Listen in Zeilen bzw. Spalten erfolgt oder ein Zuordnungszeichen angezeigt wird, und die Sprachbefehlsliste festgelegt, während die Bedienfunktionsliste veränderlich ist. Die Anzeigeeinheit kann dann beispielsweise immer an der selben Stelle eine Liste von kurzen Sprachbefehlen, wie Ziffern oder Buchstaben, mit nachfolgenden Pfeilen oder Bindestrichen anzeigen und wechselt lediglich den Inhalt der Bedienfunktionsliste in Abhängigkeit von den jeweils im vorherigen Schritt ausgewählten Untermenüs oder Funktionen. Für den Bediener ändert sich damit nur ein Teil des Bildschirminhaltes, was die Übersichtlichkeit und schnelle Erfassbarkeit erhöht. Da die Sprachbefehle unveränderlich bleiben, kann der Bediener bereits aus der Position der jeweiligen Bedienfunktion auf dem Bildschirm auf den zugehörigen Sprachbefehl schließen. Damit wird nach relativ kurzer Eingewöhnungsphase eine Bedienung mit nur noch kurzen Betrachtungszeiten der Anzeige möglich, was sich insbesondere im Kraftfahrzeug vorteilhaft auf die Fahrsicherheit auswirkt.

Um keine unnötigen Informationen an den Bediener auszugeben, stellt die Anzeige in einer weiteren Ausgestaltung nur so viele Sprachbefehle dar wie auch Bedienfunktionen angezeigt sind, d.h. die Länge der sichtbaren Sprachbefehlsliste wird an die Länge der Befehlsfunktionsliste angepasst. Im Falle von feststehenden Sprachbefehlen bedeutet das, dass jeweils die letzten Befehle der Sprachbefehlsliste ausgeblendet oder wieder eingeblendet werden, je nachdem wie viele Bedienfunktionen gerade ausgegeben werden.

Bei komplexeren Menüstrukturen ist es in einer Ausführungsform der Erfindung vorgesehen, dass die Anzeigeeinheit auf dem Grafikbildschirm eine zweidimensionale Sprachbefehlsliste und eine zweidimensionale Bedienfunktionsliste in Form einer Matrix darstellt. Jeweils eine Dimension der Sprachbefehlsliste wird dabei als Zeilen- bzw. Spaltenbeschriftung ausgegeben und die Bedienfunktionsliste füllt dann die durch die Zeilen und Spalten aufgespannte Tabelle. Auf diese Weise kann eine große Anzahl von Wahl- oder Bedienmöglichkeiten gleichzeitig und übersichtlich dargestellt werden, was die Anzahl der Bildschirmwechsel und damit die Ablenkung eines Fahrzeugführers vom Verkehrsgeschehen reduziert.

Als Alternative zu einer feststehenden Sprachbefehlsliste ist außerdem eine veränderbare Sprachbefehlsliste vorgesehen. Die Sprachbefehle können dabei je nach Inhalt der Bedienfunktionsliste aus einem gleich bleibenden, den Inhalt der Bedienfunktionsliste beschreibenden Hauptwort und einem angehängten Buchstaben oder einer angehängten Zahl bestehen, wie beispielsweise "Maßstab 1" und "Maßstab 2", oder die Sprachbefehle werden vom ersten Buchstaben oder von der ersten Silbe der zugehörigen Bedienfunktion gebildet.

In einer weiteren Ausführungsform der Erfindung ist jeweils ein Sprachbefehl identisch zur zugehörigen Bedienfunktion. Die Anzeigeeinheit gibt dann den dazu gehörenden Text nicht zweifach sondern nur einfach auf dem Grafikbildschirm aus und macht die Zuordnung durch einen Rahmen oder durch eine spezielle Farbgestaltung des Textes kenntlich. Der Bediener muss auch hier den Sprachbefehl nur wieder laut vorlesen. Durch die grafische Hervorhebung der Zuordnung wird dem Bediener deutlich gemacht, welche Informationen auf der Anzeige gleichzeitig als Sprachbefehle vorgesehen sind. Durch die Darstellung nur eines Textes wird Anzeigenplatz gespart. In den Sonderfällen, wo die Bedienfunktionen selbst nur aus wenigen bis einem Zeichen bestehen, wie beispielsweise bei der Auswahl von Ziffern oder Buchstaben, bietet sich diese Art der Darstellung ganz besonders an. So können die Ziffern als numerischer Block und die Buchstaben als Matrix ausgegeben werden, womit eine Art akustischer Tastatur realisiert wird.

Die Spracherkennungseinheit arbeitet in der erfindungsgemäßen Anordnung entweder sprecherunabhängig, d.h. die Sprachbefehle sind alle von vornherein festgelegt und wurden als Sprachmuster in einem Speicher abgelegt, oder sprecherabhängig. In der sprecherabhängigen Ausführung kann der Bediener nicht nur vorgegebene Sprachbefehle auf seine Sprechweise hin einlernen, sondern er kann auch eigene Sprachbefehle neu definieren oder vordefinierte Sprachbefehle ändern und diese dann in der Spracherkennungseinheit abspeichern. Durch die damit erhöhte Flexibilität der Anordnung ist eine Anpassung an spezielle Bedürfnisse eines Bedieners bzw. einer Gruppe von Bedienern möglich.

In einer speziellen Ausgestaltung werden die sprecherabhängigen Befehle nur dem Bediener zur Verfügung gestellt, der die Befehle auch erstellt hat, während den übrigen Bedienern die vordefinierten Sprachbefehle angezeigt werden. Jeder Bediener kann sich somit sein eigenes Bediensystem gestalten und ganz auf seine Wünsche abstimmen.

Die Erfindung wird nachfolgend anhand von Ausführungsbeispielen und der Zeichnung verdeutlicht. Es zeigen:
- Fig. 1: ein Blockschaltbild einer Anordnung zur Sprachbedienung eines elektronischen Gerätes;
- Fig. 2 bis Fig. 10: verschiedene Ausgestaltungen von erfindungsgemäßen Ausgaben einer Anzeigeeinheit auf einem Grafikbildschirm

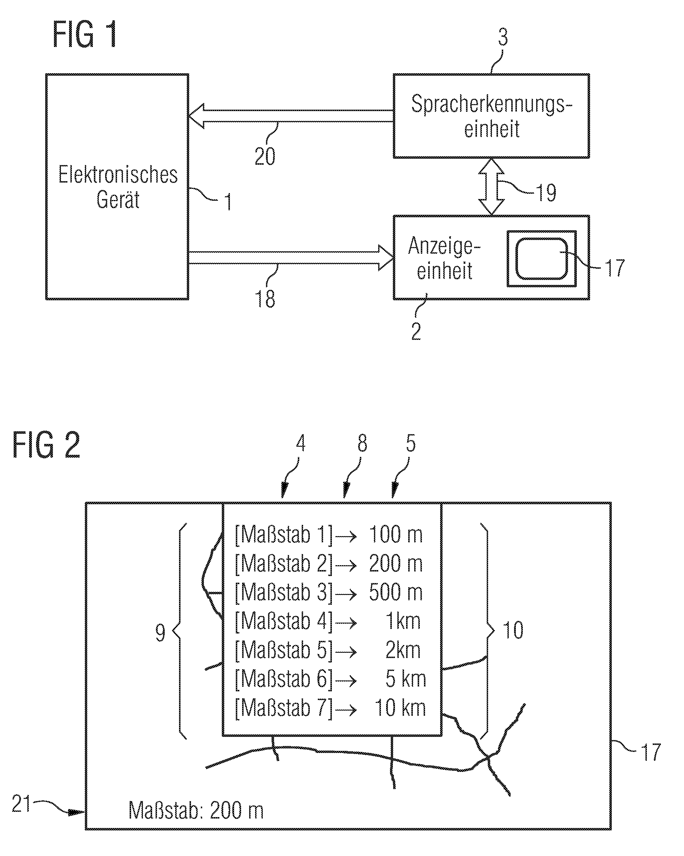

Figur 1 zeigt eine Anordnung aus einem elektronischen Gerät 1, beispielsweise einem Navigations- oder Audiogerät oder einem Mobiltelefon, einer Anzeigeeinheit 2 und einer Spracherkennungseinheit 3. Zu der Anzeigeeinheit 2 gehört ein Grafikbildschirm 17, welcher beispielsweise ein LCD- oder TFT-Display sein kann. Über den Datenbus 18 gibt das elektronische Gerät 1 Informationen über seinen momentanen Status und gegebenenfalls über weitere, auf dem Grafikbildschirm 17 anzuzeigende Daten an die Anzeigeeinheit 2 aus, welche diese Informationen aufbereitet und dementsprechend das auszugebende Bedienmenü gestaltet. Das auf dem Grafikbildschirm 17 angezeigte Menü mit den zugeordneten Sprachbefehlen (s. Figuren 2 bis 10) ermöglicht einem Bediener eine sprachgeführte Benutzung des elektronischen Gerätes. Die Anzeigeeinheit liefert je nach aktuell dargestelltem Bildschirminhalt über den Datenbus 19 eine Information an die Spracherkennungseinheit 3, die daraufhin das zu dem Bildschirminhalt gehörigen Vokabular bereitstellen kann, um die Spracherkennung zu beschleunigen. Die Spracherkennungseinheit 3 empfängt dann über ein nicht dargestelltes Mikrofon einen vom Bediener gesprochenen Befehl und wandelt die zugehörigen Audiodaten in eine logische Befehlsinformation um, wobei die logische Befehlsinformation einer Bedienfunktion des elektronischen Gerätes entspricht. Die Bedienfunktion wird über den Datenbus 19 an die Anzeigeeinheit 2 zur entsprechenden Veränderung des Inhaltes des Grafikbildschirms 17 und über den Datenbus 20 an das elektronische Gerät zur Ausführung der Bedienfunktion weitergeleitet. Sofern die vom Bediener gewählte Bedieninformation noch keine Aktion von Seiten des elektronischen Gerätes erfordert, weil zum Beispiel lediglich in ein Untermenü weiterverzweigt wurde, wird lediglich eine Information an die Anzeigeeinheit 2 gesendet.

Die Figuren 2 bis 10 zeigen Beispiele für erfindungsgemäße Ausgaben der Anzeigeeinheit 2 auf dem Grafikbildschirm 17. In Fig. 2 ist ein Auswahlmenü angezeigt, wie es bei der Einstellung des Straßenkartenmaßstabs eines Navigationssystems zur Anwendung kommen könnte. Die Sprachbefehle 4 setzen sich zusammen aus dem Wort "Maßstab" und angehängten Ziffern von 1 bis 7. Dem ersten Sprachbefehl 4 "Maßstab 1" ist die Bedienfunktion 5 "100 m" zugeordnet, d. h. nachdem der Bediener "Maßstab 1" gesagt hat, würde die Anzeigeeinheit 2 die Darstellung der in Fig. 2 angedeuteten Straßenkarte vom aktuellen Maßstab (siehe Informationszeile 21) von 200 m auf den gewünschten Maßstab von 100 m ändern. Der aktuelle Maßstab ist als Zusatzinformation in den Grafikbildschirm 17 eingeblendet. Derartige Zusatzinformationen werden in den Beispielen der Figuren 2 bis 10 stets an derselben Stelle, in der Informationszeile 21, angezeigt, wo sie für den Bediener leicht auffindbar sind. Die Zuordnung zwischen den Sprachbefehlen 4 und den Bedienfunktionen 5 wird durch Zuordnungszeichen 8 kenntlich gemacht, die in Fig. 2 als Pfeile ausgeführt sind. Die Sprachbefehle 4 sind in der Sprachbefehlsliste 9 zusammengefasst und die Bedienfunktionen 5 in der Bedienfunktionsliste 10. Das Auswahlmenü wird in diesem Beispiel überlappend mit der darunter liegenden Straßenkarte angezeigt.

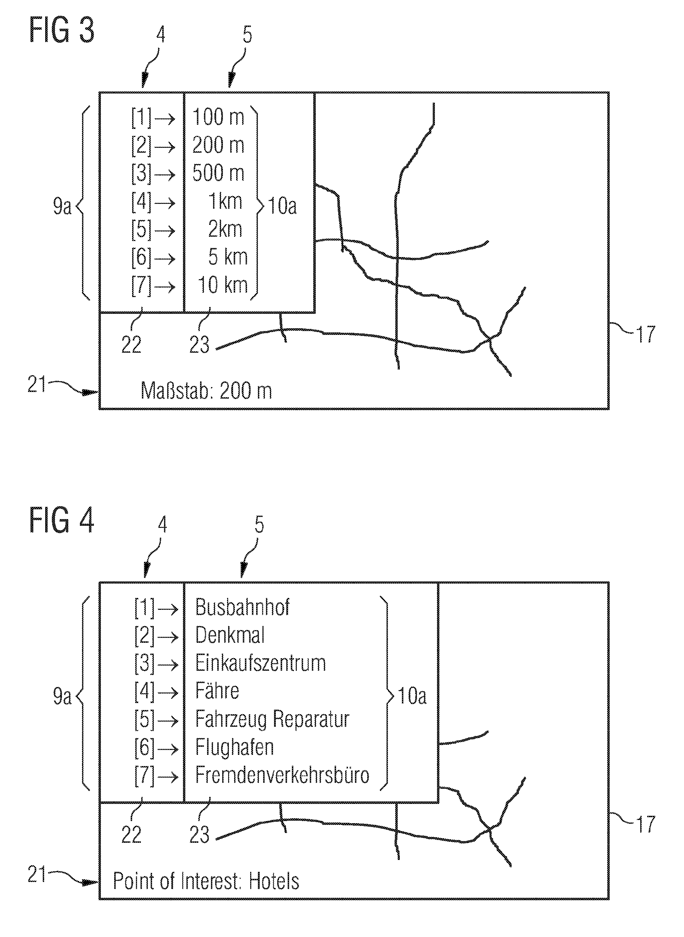

Aus Fig. 3 geht dasselbe Auswahlmenü mit einer etwas veränderten Darstellung hervor. Die Sprachbefehle 4 sind hier auf die Ziffern 1 bis 7 reduziert und das gesamte Auswahlmenü ist mit einem einfarbigen Hintergrund vor die Straßenkarte gelegt. Die Sprachbefehlsliste 9a sowie die Zuordnung mittels Pfeilen sei in den Figuren 3 bis 5 feststehend, d.h. die Anzeigeeinheit 2 stellt bei wechselndem Inhalt der Bedienfunktionsliste 10a immer dieselbe Sprachbefehlsliste 9a zugeordnet dar. Zu diesem Zweck befindet sich die Sprachbefehlsliste 9a in einem eigenen Grafikfenster 22, welches unverändert angezeigt wird.

Der Inhalt der Bedienfunktionsliste 10a ändert sich von den Maßstabsangaben aus Fig. 3 zu auswählbaren Kategorien für so genannte Points of Interest, zu sehen in Fig. 4. Die aktuell ausgewählte Kategorie der Points of Interest, die Hotels, wird wieder in der Informationszeile 21 angezeigt. Das Grafikfenster 22 mit der Sprachbefehlsliste 9a ist gleich geblieben, während sich die Bedienfunktionsliste 10a und auch die Breite des zugehörigen Grafikfensters 23 geändert haben.

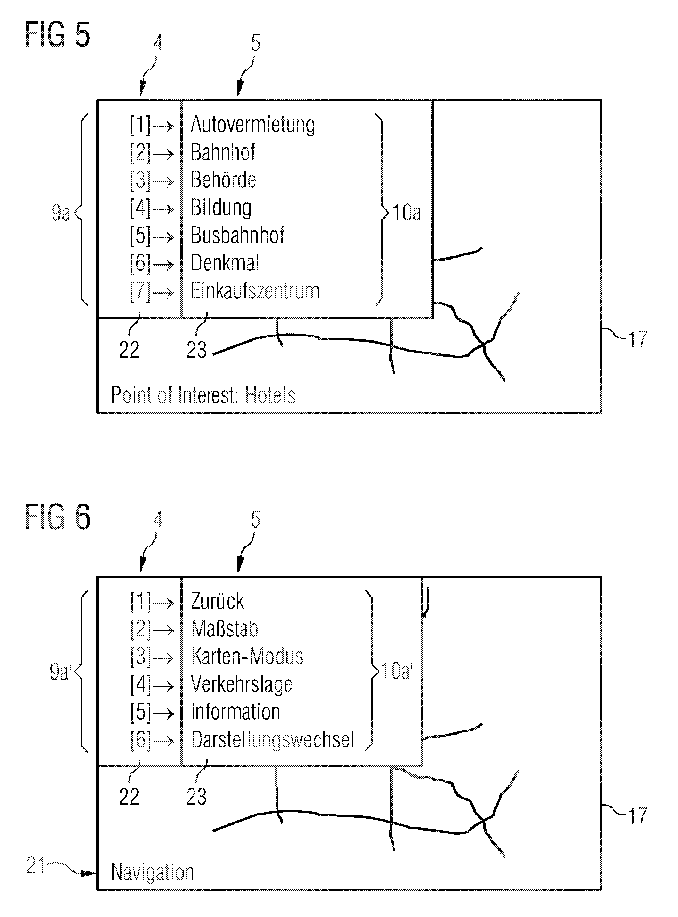

Von Fig. 4 zu Fig. 5 ändert sich der Inhalt der Bedienfunktionsliste 10a dahingehend, dass die Einträge aus Fig. 4 nach unten aus dem sichtbaren Bereich herausgeschoben wurden, so dass nur noch die Bedienfunktionen 5 "Busbahnhof", "Denkmal" und "Einkaufszentrum" übrig bleiben, während neue Bedienfunktionen 5, wie "Autovermietung" und "Bahnhof", hinzukommen. Die Zuordnungen zu den Sprachbefehlen 4 "1" bis "7" ändern sich entsprechend. Dies entspricht einer Scrollbewegung des Inhaltes des Grafikfensters 23 nach oben.

Von Fig. 5 zu Fig. 6 ändern sich sowohl der Inhalt als auch die Anzahl der in der Bedienfunktionsliste 10a' enthaltenen Bedienfunktionen 5. Dementsprechend wird die Anzahl der auf dem Grafikbildschirm 17 sichtbaren Sprachbefehle 4 in der Sprachbefehlsliste 9a' angepasst, weshalb nur noch sechs Menüzeilen angezeigt werden. Der Inhalt der Bedienfunktionsliste 10a' betrifft ein Untermenü zu allgemeinen Einstellungen eines Navigationssystem, was durch den Eintrag auf der Informationszeile 21 hervorgehoben ist.

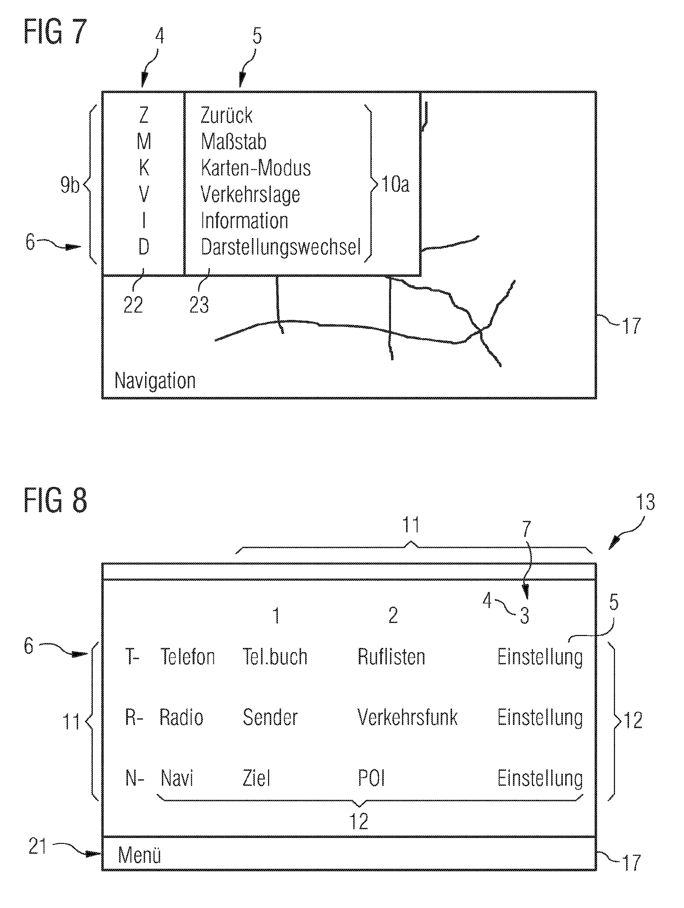

In Fig. 7 sind wiederum nur sechs Menüzeilen zu sehen. Hier wurde jedoch neben dem Inhalt der Bedienfunktionsliste 10a auch der Inhalt der Sprachbefehlsliste 9b geändert. Anstelle von Ziffern sind den Bedienfunktionen 5 jeweils Sprachbefehle 4 zugeordnet, die aus den Anfangsbuchstaben der Bedienfunktionen 5 gebildet sind. Die Zuordnung wird lediglich durch die jeweilige Anordnung in ein und derselben Bildzeile 6 verdeutlicht.

In Fig. 8 ist ein Beispiel für ein komplexes Menü dargestellt, welches zur Bedienung von drei elektronischen Geräten 1 dient, welche alle drei an die Anzeigeeinheit 2 und die Spracherkennungseinheit 3 angeschlossenen sind. Das Menü aus Fig. 8 erlaubt eine Auswahl aus verschiedenen Bedienfunktionen 5 eines Telefons, eines Radios und eines Navigationssystems. Die Sprachbefehlsliste 11 und die Bedienfunktionsliste 12 liegen in zweidimensionaler Form vor und werden von der Anzeigeeinheit 2 in Form einer Matrix 13 auf dem Grafikbildschirm 17 dargestellt. Das jeweils anzuwählende Gerät wird über die Sprachbefehle "T", "R" und "N" ausgewählt, gefolgt von den Zahlen "1", "2" oder "3", je nach gewünschter Bedienfunktion 5. Durch Ansage von "R2" wechselt beispielsweise die Anzeigeeinheit 2 in ein Menü zum Ein- und Ausschalten sowie der Senderwahl des Verkehrsfunks. Die Zuordnung zwischen den Sprachbefehls-Buchstaben und den elektronischen Geräten wird über die Anordnung in derselben Zeile 6 verdeutlicht und die Zuordnung zwischen den Sprachbefehls-Ziffern und den Bedienfunktionen 5 eines Gerätes durch die Anordnung in derselben Spalte 7.

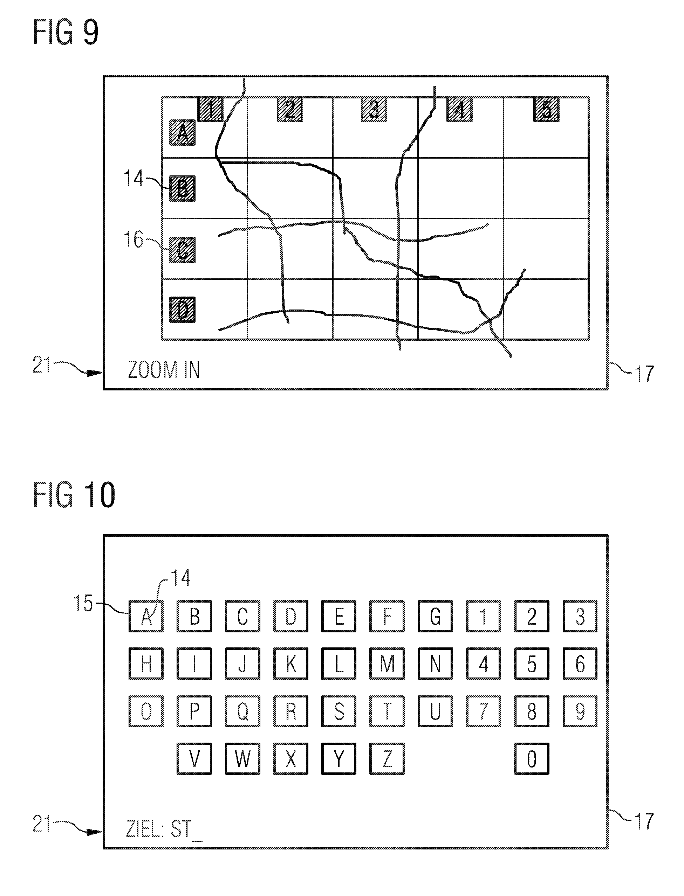

Fig. 9 zeigt ein Beispiel für eine Zoom-Funktion eines Navigationssystems. In diesem Fall sind die Sprachbefehle 4 und die Bedienfunktionen 5 identisch, weshalb diese nicht zweifach, beispielsweise als "A → A", sondern nur einfach, als "A" dargestellt sind. Damit der Bediener weiß, dass es sich bei dem dargestellten Text 14 um Sprachbefehle handelt, sind diese grau hinterlegt und damit mit einer farblichen Hervorhebung 16 versehen. Durch Ansage von "C3" zoomt die Anzeigeeinheit 2 in das zugehörige Gebiet der Straßenkarte hinein.

Auch in Fig. 10 sind die Sprachbefehle 4 und die Bedienfunktionen 5 identisch und nur einfach als Text 14 abgebildet. Die Zuordnung wird durch die Rahmen 15 um den einzelnen Sprachbefehle deutlich gemacht. Durch die Abbildung aller Buchstaben und Ziffern erhält der Benutzer die Möglichkeit, eine Art akustischer Tastatur zu bedienen. In dem gezeigten Beispiel wird damit eine Zieleingabe eines Navigationssystems realisiert.

## Patentansprüche

1. Anordnung zur Sprachbedienung eines elektronischen Gerätes (1), insbesondere in einem Kraftfahrzeug, mit einer mit dem elektronischen Gerät (1) verbundenen Spracherkennungseinheit (3), einer mit dem elektronischen Gerät (1) und der Spracherkennungseinheit (3) verbundenen Anzeigeeinheit (2) und einem zur Anzeigeeinheit gehörenden Grafikbildschirm (17), wobei die Spracherkennungseinheit (3) gesprochene Sprachbefehle identifiziert und zugeordnete Bedienfunktionen des elektronischen Gerätes (1) anwählt und/oder auslöst, **dadurch gekennzeichnet, dass** die Anzeigeeinheit (2) auf dem Grafikbildschirm (17) einen Sprachbefehl (4) und eine diesem Sprachbefehl (4) zugeordnete Bedienfunktion (5) als Text anzeigt und die Zuordnung zwischen dem Sprachbefehl (4) und der Bedienfunktion (5) grafisch kenntlich macht.

2. Anordnung nach Anspruch 1, **dadurch gekennzeichnet, dass** die Anzeigeeinheit (2) die Zuordnung zwischen Sprachbefehl (4) und Bedienfunktion (5) durch die Anordnung auf derselben Zeile (6) kenntlich macht.

3. Anordnung nach Anspruch 1, **dadurch gekennzeichnet, dass** die Anzeigeeinheit (2) die Zuordnung zwischen Sprachbefehl (4) und Bedienfunktion (5) durch die Anordnung in derselben Spalte (7) kenntlich macht.

4. Anordnung nach Anspruch 1, **dadurch gekennzeichnet, dass** die Anzeigeeinheit (2) die Zuordnung zwischen Sprachbefehl (4) und Bedienfunktion (5) durch ein grafisches Zuordnungszeichen (8) kenntlich macht.

5. Anordnung nach einem der vorhergehenden Ansprüche, **dadurch gekennzeichnet, dass** die Anzeigeeinheit (2) auf dem Grafikbildschirm (17) eine Sprachbefehlsliste (9) mit mehr als einem Sprachbefehl (4) und eine zugeordnete Bedienfunktionsliste (10) mit mehr als einer Bedienfunktion (5) anzeigt.

6. Anordnung nach Anspruch 5, **dadurch gekennzeichnet, dass** die Sprachbefehlsliste (9a) und die Art der Zuordnung fest vorgegeben sind und die Bedienfunktionsliste (10a) veränderbar ist.

7. Anordnung nach Anspruch 3, **dadurch gekennzeichnet, dass** die Anzeigeeinheit (2) die Anzahl der auf dem Grafikbildschirm (17) sichtbaren Sprachbefehle (9a') an die Anzahl der sichtbaren Bedienfunktionen (10a') anpasst.

8. Anordnung nach einem der vorhergehenden Ansprüche, **dadurch gekennzeichnet, dass** die Sprachbefehlsliste (11) und die Bedienfunktionsliste (12) zweidimensional sind und die Anzeigeeinheit (2) diese auf dem Grafikbildschirm (17) in Form einer Matrix (13) darstellt.

9. Anordnung nach einem der vorhergehenden Ansprüche, **dadurch gekennzeichnet, dass** auch die Sprachbefehlsliste (9b) veränderbar ist.

10. Anordnung nach einem der vorhergehenden Ansprüche, **dadurch gekennzeichnet, dass** die Bedienfunktion (5) und der zugehörige Sprachbefehl (4) identisch sind und die Anzeigeeinheit den zugehörigen Text (14) auf dem Grafikbildschirm (17) nur einfach ausgibt und die Zuordnung durch einen Rahmen (15) um den Text und/oder durch eine farbige Hervorhebung (16) des Textes kenntlich macht.

11. Anordnung nach einem der vorhergehenden Ansprüche, **dadurch gekennzeichnet, dass** die Sprachbefehle (4) sprecherunabhängig vorgegeben sind.

12. Anordnung nach einem der vorhergehenden Ansprüche, **dadurch gekennzeichnet, dass** die Sprachbefehle (4) von einem Bediener sprecherabhängig vorgebbar sind.

13. Anordnung nach Anspruch 9, **dadurch gekennzeichnet, dass** die sprecherabhängigen Sprachbefehle (4) nur dem ursprünglichen Bediener und die sprecherunabhängigen Sprachbefehle (4) allen weiteren Bedienern zur Verfügung stehen.

14. Anordnung nach einem der vorhergehenden Ansprüche, **dadurch gekennzeichnet, dass** die Sprachbefehle (4) reine Zahlen sind.

15. Anordnung nach einem der vorhergehenden Ansprüche, **dadurch gekennzeichnet, dass** die Sprachbefehle (4) reine Buchstaben sind.

16. Anordnung nach einem der vorhergehenden Ansprüche, **dadurch gekennzeichnet, dass** die Sprachbefehle (4) eine Kombination aus einem fest vorgegebenen Wort und angehängten Zahlen bzw. Buchstaben sind.
